# EUROPÄISCHE PATENTSCHRIFT

(11) **EP 0 899 979 B1**
(45) Veröffentlichungstag und Bekanntmachung des Hinweises auf die Patenterteilung: **18.06.2008**
(21) Anmeldenummer: 98440167.9
(22) Anmeldetag: 31.07.1998
(51) Int. Cl.: H04Q 7/32

(54) **Endgerät, Berechtigungskarte und Telekommunikationsnetz für einen Teilnehmer sowie Verfahren zum Ändern eines dem Teilnehmer zugeordneten Diensteprofils**
Terminal, SIM-card and telecommunications system for a subsciber as well as method for changing a subscriber related service profile
Terminal, carte d'authentication SIM et réseau de télécommunication pour l'abonné ansi que procédé de changement du profil de service d'abonnée

(30) Priorität: 09.08.1997 DE 19734622
(43) Veröffentlichungstag der Anmeldung: 03.03.1999
(73) Patentinhaber: Alcatel Lucent, 75008 Paris (FR)
(72) Erfinder: Herzog, Günther, 70439 Stuttgart (DE)
(74) Vertreter: Brose, Gerhard

(56) Entgegenhaltungen:
- WO-A-93/07566
- WO-A-97/22219
- GB-A- 2 315 954
- MOHAMMED ZAID: "PERSONAL MOBILITY IN PCS" IEEE PERSONAL COMMUNICATIONS,US,IEEE COMMUNICATIONS SOCIETY, Bd. 1, Nr. 4, 1. Oktober 1994 (1994-10-01), Seite 12-16 XP000478092 ISSN: 1070-9916
- GRIGOROVA T.; LEUNG I.: 'SIM Cards' TELECOMMUNICATION JOURNAL OF AUSTRALIA Bd. 43, Nr. 2, 1993, MELBOURNE, AUSTRALIA, Seiten 33 - 38

## Beschreibung

Die Erfindung betrifft ein Endgerät für einen Teilnehmer eines Telekommunikationsnetzes nach dem Oberbegriff des Anspruch 1 sowie eine Berechtigungskarte für den Teilnehmer, ein mit dem Endgerät ausgestattetes Telekommunikationsnetz sowie ein Verfahren zum Ändern eines dem Teilnehmer zugeordneten Diensteprofils nach einem der nebengeordneten Ansprüche.

In der Patentschrift DE 42 42 151 ist ein Endgerät für einen Teilnehmer eines drahtlosen Telekommunikationsnetzes, nämlich ein Mobilfunkgerät für den Teilnehmer eines Mobilfunknetzes beschrieben. Das Endgerät hat Eingabe- und Ausgabemittel, nämlich eine Tastatur und ein LCD-Display. Außerdem hat das Endgerät Mittel zur Datenverarbeitung von Authentifikationsparametern, die auf einem sogenannten Teilnehmer-Identifikations-Modul gespeichert sind. Das Teilnehmer-Identifikations-Modul ist eine in das Endgerät einsteckbare Chip-Karte mit Datenspeicher. Das bedeutet das Endgerät hat einen Prozessor (Mittel zur Datenverarbeitung), der auf den Datenspeicher der Chip-Karte zugreift. Der Datenspeicher enthält Daten (Authentifikationsparameter), die bei der Authentifizierung des Teilnehmers überprüft werden. Das Engerät enthält auch ein Sendeteil, das beim Einbuchen des Teilnehmemers, d.h. beim Verbindungsaufbau, die auf der Chip-Karte gespeicherten Daten zur Authentifizierung des Teilnehmers an das Telekommunikationsnetz (Mobilfunknetz) sendet. Es wird dann geprüft, ob der Teilnehmer berechtigt ist, das Telkommunikationsnetz zu benützen. Demnach kann die Chip-Karte auch als Berechtigungskarte bezeichnet werden. Das aus DE 42 42 151 bekannte Endgerät und das Telekommunikationsnetz sind nach dem Mobilfunk-Standard "GSM" (Global System for Mobile Communications) ausgelegt.

Das GSM-Mobilfunknetz ist in dem "Handbuch der mobilen Sprach-, Text- und Datenkommunkation" von J. Kedaj und F. Joussen, im Band 1, Kap. 4 beschrieben. Das Handbuch ist erschienen unter der ISBN-Nr. 3-923759-16-9 bei der Neuen Mediengesellschaft Ulm GmbH, Deutschland. In der aktualisierten Fassung vom Nov. 1996 wird im Band 1, Kap. 4 , Abschnitt 4.1.5 auf den Seiten 1-10 die Struktur eines Diensteprofils beschrieben, das dem Teilnehmer zugeordnet ist. Danach umfaßt ein Diensteprofil folgende Arten von Diensten: Telekommunikationsdienste, Teledienste, Trägerdienste und Zusatzdienste. Als Beispiele für Teledienste werden die Übertragung von Sprache (Telefonie), von Kurznachrichten oder von Faksimile genannt. Zusatzdienste sind etwa Konferenzdienste, Anrufweiterleitung oder Bildung von geschlossenen Benutzergruppen. In dem Handbuch, im Band 1, Kap. 4, Abschnitt 4.1.5 wird auf den Seiten 31-50 außerdem beschrieben, daß die Daten für das Diensteprofil in der sogenannten Heimatdatei (engl. home location register) gespeichert sind. Die Heimatdatei ist eine Datenbank innerhalb des Mobilfunknetzes und wird von dem Diensteanbieter (engl. service provider) verwaltet. Demnach kann das Diensteprofil nur durch den Diensteanbieter veändert werden. Will der Teilnehmer Informationen über sein Diensteprofil erhalten, so muß er Auskunft beim Diensteanbieter einholen. Im GSM-Mobilfunknetz ist es auch möglich sich einzelne Daten für das Diensteprofil am Endgerät anzeigen zu lassen, z.B. Daten darüber, ob der Kurznachrichtendienst aktiviert ist. Dazu müssen diese Daten von der Heimatdatei an das Endgerät übertragen werden, wodurch die Signalisierungslast im Mobilfunknetz steigt.

Aus DE-A-3428237 ist zu entnehmen, daß auch in drahtgebundenen Telekommunikationsnetzen dem Teilnehmer ein Diensteprofil zugeordnet sein kann. Dort in DE-A-3428237 ist ein drahtgebundenes Telekommunikationsnetz, nämlich das sogenannte ISDN (Integrated Services Digital Network) beschrieben, in dem der Teilnehmer neben dem herkömmlichen Fernsprechdienst auch verschiedene Kommunikationsdienste , wie etwa "Telefax", "Telex" oder "Bildschirmtext", nutzen kann. Es wird ein Endgerät beschrieben, in das verschiedene Chipkarten einsteckbar sind, um das Endgerät für die Durchführung der verschiedenen Kommunikationsdienste zu erweitern. Der Teilnehmer kann sich die möglichen Kommunikationsdienste auf einer Anzeige des Endgerätes anzeigen lassen, d.h. der Teilnehmer hat Zugriff auf Informationen über sein Diensteprofil. Jede Chipkarte ermöglicht einen bestimmten Kommunkationsdienst. Es ist auch beschrieben, daß eine Chipkarte mehrere Kommunikationsdienste ermöglicht. Demnach ist in DE-A-3428237 ein Endgerät beschrieben das durch Einstecken von zumindestens einer Chipkarte für die Durchführung von mehreren Kommunikationsdiensten erweitert werden kann. Dazu muß jedoch die Steuerungssoftware zur Ausführung dieser Kommunikationsdienste auf der Chipkarte selbst gespeichert sein. Daher muß die Chipkarte Steuerdaten enthalten, die über das Endgerät zum Telekommunikationsnetz übertragen werden müssen, damit die Kommunikationsdienste ausgeführt werden können. Für die Ausführung der Kommunikationsdienste werden üblicherweise die Steuerdaten von der Ablaufsteuerung innerhalb der Vermittlungstelle nach einem vorgegebenen Protokoll bearbeitet. Die Chipkarte enthält also Daten, nämlich die Steuerdaten für die Ablaufsteuerung, auf die das Telekommunikationsnetz im Rahmen des Protokolls mehrmals zugreifen muß. Dadurch entsteht eine hohe Signalisierungslast auf der Verbindung zwischen Endgerät und Telekommunikationsnetz, die die Durchführung der Kommunikationsdienste verlangsamt.

In dem Dokument "SIM CARDS", Theodora Grigorova and Ivan Leung, Telecommunication Journal of Australia, Bd. 43, Nr. 2, 1993, Seiten 33-38 OPTUS Communications, wird die Funktionsweise von SIM Karten beschrieben, auf denen Informationen über zugeordnete und aktivierte Dienste gespeichert werden können.

Aufgabe der Erfindung ist es, für ein Telekommunikationsnetz ein Endgerät vorzuschlagen, das dem Teilnehmer den einfachen Zugriff auf Informationen über sein Diensteprofil und die schnelle Durchführung von Kommunikationsdiensten ermöglicht.

Außerdem soll ein mit solchen Endgeräten ausgestattetes Telekommunikationsnetz, eine Berechtigungskarte für den Teilnehmer zum Einführen in diese Endgeräte sowie ein Verfahren zum Ändern eines dem Teilnehmer zugeordneten Diensteprofils vorgeschlagen werden.

Die Aufgabe wird gelöst durch ein Endgerät mit den Merkmalen nach Anspruch sowie durch ein Telekommunikationsnetz, ein Verfahren und eine Berechtigungskarte mit den Merkmalen nach einem der nebengeordneten Ansprüche.

Demnach wird ein Endgerät für einen Teilnehmer eines Telekommunikationsnetzes vorgeschlagen mit Spracheingabe- und Sprachausgabemitteln, mit einem damit verbundenen Prozessor, der auf einen Datenspeicher zugreift, den der Teilnehmer von dem Endgerät entfernen und mit sich führen kann. Der Datenspeicher ist ein löschbarer Datenspeicher, in dem Daten für ein Diensteprofil gespeichert sind, das dem Teilnehmer zugeordnet ist. Der Prozessor steuert die Eingabe- und Ausgabemittel so, daß der Teilnehmer die Daten für das Diensteprofil ändern und ausgeben lassen kann.

Dadurch kann der Teilnehmer am Endgerät selbst Informationen über sein Diensteprofil abfragen und Änderungen des Diensteprofils vornehmen. Die Diensteprofildaten sind in dem Datenspeicher gespeichert, der in das Endgerät eingeführt wird. Die Steuerdaten für die Ablaufsteuerung sind jedoch im Endgerät selbst oder vorzugweise im Telekommunikationsnetz gespeichert. Dadurch wird die Signalisierungslast auf der Verbindung zwischen Endgerät und Telekommunikationsnetz erheblich reduziert.

Das vorgeschlagene Telekommunikationsnetz hat die erfindungsgemäßen Endgeräte, d.h. hat Endgeräte für Teilnehmer, von denen jedes Eingabe- und Ausgabemittel sowie einen damit verbundenen Prozessor enthält, der auf einen Datenspeicher zugreift, den der Teilnehmer von dem Endgerät entfernen und mit sich führen kann. Der Datenspeicher ist ebenfalls ein löschbarer Datenspeicher, in dem Daten für ein Diensteprofil gespeichert sind, das dem Teilnehmer zugeordnet ist, und daß der Prozessor die Eingabe- und Ausgabemittel so steuert, daß der Teilnehmer die Daten für das Diensteprofil ändern und sich anzeigen lassen kann.

Das vorgeschlagene Verfahren ist ein Verfahren zum Ändern von Daten für ein Diensteprofil, das einem Teilnehmer eines Telekommunikationsnetzes zugeordnet ist, bei dem der Teilnehmer ein Endgerät bedient, das Eingabe- und Ausgabemittel sowie einen Prozessor hat, der auf einen Datenspeicher zugreift, den der Teilnehmer von dem Endgerät (MS) entfernen und mit sich führen kann. Das Verfahren hat folgende Schritte:
1) In dem Datenspeicher werden die Daten für das Diensteprofil gespeichert.
2) Durch Bedienung des Eingabemittels wird von dem Teilnehmer die Ausgabe von mindestens einem Teil der Daten für das Diensteprofil angefordert. 3) Die angeforderten Daten für das Diensteprofil werden aus dem Datenspeicher gelesen und auf dem Ausgabemittel ausgegeben. 4) Der Teilnehmer wird durch das Ausgabemittel aufgefordert, die zu ändernden Daten für das Diensteprofil anzugeben. 5) Die zu ändernden Daten werden an das Telekommunikationsnetz gesendet. 6) In dem Telekommunikationsnetz wird zumindest geprüft, ob die Änderung des Diensteprofils technisch ausführbar ist. 7) Falls die Änderung ausführbar ist, werden die geänderten Daten in einer Datenbank des Telekommunikationsnetzes gespeichert und wird eine Bestätigung über die Änderung der Daten an das Endgerät gesendet. 8) Nach dem Empfang der Bestätigung werden die gänderten Daten in den Datenspeicher geschrieben.

Vorteilhafte Ausgestaltungen sind den Unteransprüchen zu entnehmen.

Danach ist es beonders vorteilhaft, den Datenspeicher auf einer Berechtigungskarte anzuordnen, auf der die Teilnehmer-Kennung für den Teilnehmer gespeichert ist, und in dem Endgerät einen mit dem Prozessor verbundenen Kartenleser anzuordnen, der die Berechtigungskarte zum Lesen und Schreiben des Datenspeichers aufnimmt, wobei das Endgerät vorzugweise eine Mobilstation ist und daß das Telekommunikationsnetz ein Mobilfunknetz ist. Der Teilnehmer braucht dadurch nur seine Berechtigungskarte in das Endgerät zu stecken, um sein Diensteprofil abzufragen und zu ändern.

Außerdem ist es erfindungsgemäß besonders vorteilhaft, dass die Eingabe- und Ausgabemittel Spracheingabe- und Sprachausgabemittel sind, und der Prozessor eine sprachgesteuerte Abfrage und Änderung der Daten für das Diensteprofil steuert. Dadurch kann der Teilnehmer sich die Daten ansagen lassen.

Es ist auch vorteilhaft, wenn das Telekommunikationsnetz mindestens eine Datenbank enthält in der Kopien der auf den Datenspeichern gespeicherten Daten für die Diensteprofile gespeichert sind. Dies ist einerseits für den Zugriff des Diensteanbieters (service provider) auf das Diensteprofil notwendig und andererseits wird dadurch die Signalisierungslast auf der Verbindung zwischen Endgerät und Telekommunikationsnetz nochmals reduziert. Ändert der Diensteanbieter Daten des Diensteprofils in der Datenbank des Telekommunikationsnetzes, so müssen die Daten auf der Berechtigungskarte über ein Abgleichverfahren ebenfalls geändert werden. Die Datenbank ist vorzugsweise die sogenannte Heimatdatei (home location register).

Die Erfindung wird nun anhand eines Ausführungsbeispiels und unter Zuhilfenahme der folgenden Zeichnungen näher beschrieben:
- Fig. 1,: die schematisch den Aufbau eines Telekommunikationsnetzes und eines Endgerätes gemäß der Erfindung zeigt und
- Fig. 2,: die schematisch ein Flußdiagramm zu dem erfindungsgemäßen Verfahren zeigt.

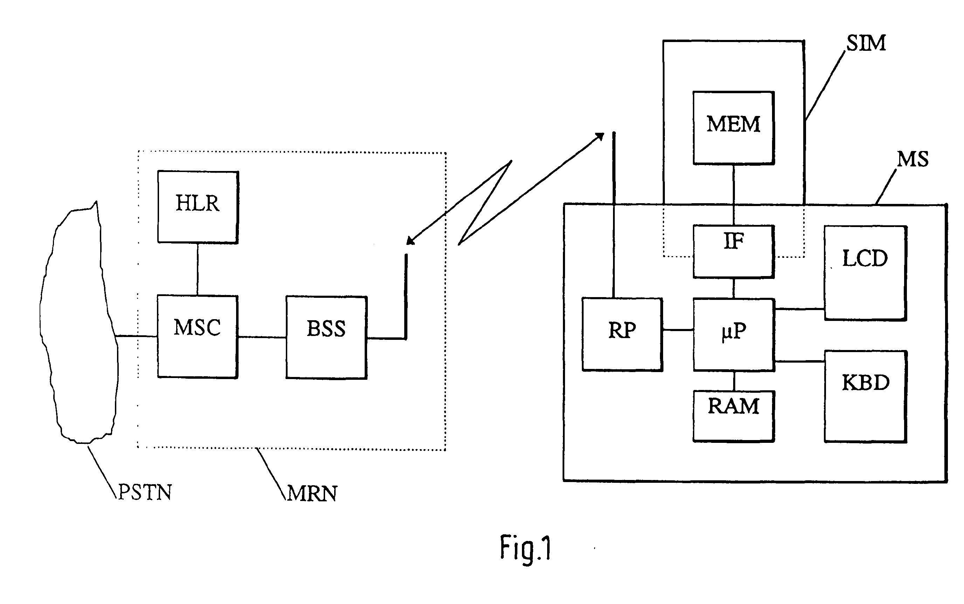

Fig. 1 zeigt schematisch ein Telekommunikationsnetz, hier ein Mobilfunknetz MRN, und ein Endgerät, hier eine Mobilstation MS. Das Mobilfunknetz enthält eine mit einem öffentlichen Telekommunikationsnetz PSTN verbundene Mobilfunkvermittlungsstelle MSC und eine damit verbundene Datenbank HLR. Außerdem enthält das Mobilfunknetz ein mit der Mobilfunkvermittlungsstelle verbundenes Funkfeststationssubsystem BSS, auch Basisstationssubsystem genannt. Dieses Basisstationssubsystem besteht im wesentlichen aus einer Funkfeststationssteuerung und mehreren daran angeschlossenen Funkfeststationen, die jeweils eine Funkzelle versorgen. In der Beschreibung dieses Beispieles wird nur auf eine Funkzelle eingegangen, das bedeutet, daß für das in Fig. 1 dargestellte Basisstationssubsystem BSS schematisch nur eine Antenne dargestellt ist. Über diese Antenne steht das Mobilfunknetz MRN mit der Mobilstation MS in Funkverbindung.

Die Mobilstation MS enthält im wesentlichen ein Funkkommunikationsteil RP, Eingabe- und Ausgabemittel KBD bzw. LCD, einen Kartenleser IF sowie einen Prozessor µP mit einem Arbeitsspeicher RAM. Die Mobilstation ist eine digitale Funkvorrichtung, bei der der Prozessor mit allen anderen Komponenten verbunden ist. Die Eingabe- Ausgabemittel sind in diesem Beispiel eine Tastatur KBD und eine Flüssigkristalanzeige LCD. Der Kartenleser IF der Mobilstation nimmt eine Berechtigungskarte SIM auf, auf der ein Datenspeicher MEM angeordnet ist. Der Mikroprozessor µP kann somit auf die in dem Datenspeicher MEM abgelegten Daten zugreifen.

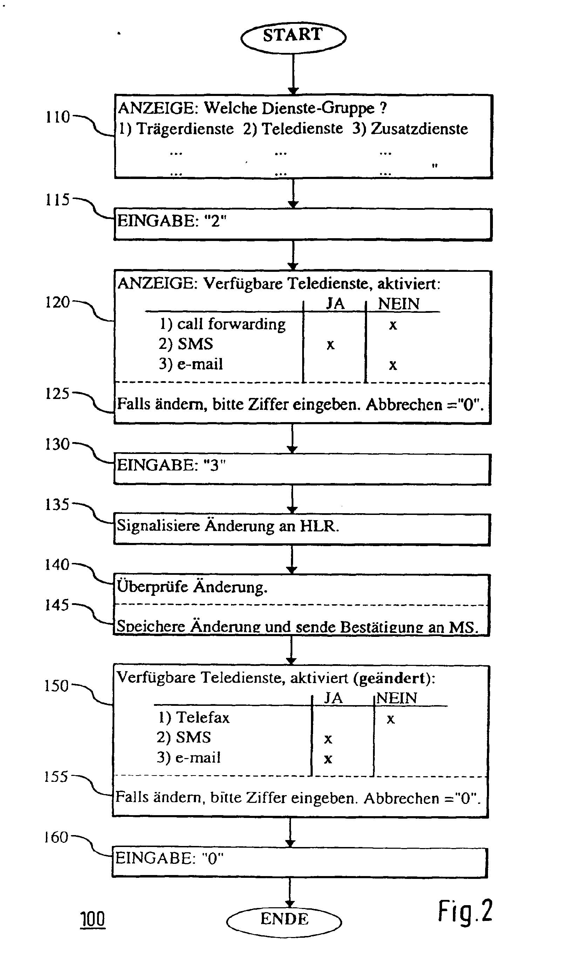

Die Funktionsweise des in Fig. 1 dargestellten Endgerätes MS und der Austausch von Daten zwischen dem Endgerät und dem dargestellten Telekommunikationsnetz MRN wird im folgenden anhand der Fig. 1 in Verbindung mit der Fig. 2 beschrieben:

Fig. 2 zeigt schematisch ein Ablaufdiagramm für ein erfindungsgemäßes Verfahren 100 zum Ändern von Daten, die auf dem Datenspeicher MEM abgespeichert sind. Diese Daten geben das Diensteprofil für den Teilnehmer wieder, d.h. sie geben an, welche Telekommunikationsdienste der Teilnehmer gebucht hat und welche davon momentan aktiviert sind. Diese Daten entsprechen einem Datenbankauszug aus der der Datenbank HLR, die mit der Mobilfunkvermittlungsstelle MSC verbunden ist (siehe Fig. 1). Der Teilnehmer kann nun wie im folgenden beschrieben, diese Daten für sein Diensteprofil am Endgerät selbst abrufen und ändern, ohne eine Verbindung zu dem Telekommunikationsnetz (Mobilfunknetz MRN) herstellen zu müssen.

Zur Abfrage dieser Daten wird dem Teilnehmer in einem ersten Schritt 110 angezeigt, welche Dienstegruppen er zur Zeit gebucht hat. In diesem Beispiel werden dem Teilnehmer die bereits eingangs genannten drei Dienstegruppen angezeigt, nämlich: 1.) Trägerdienste, 2.) Teledienste und 3.) Zusatzdienste. In Anlehnung an die im GSM-Standard verwendete Nomenklatur werden diese Dienstegruppen auch mit 1.) "bearer services", 2.) "tele services" und 3.) "supplementary services" bezeichnet und betreffen Leistungsmerkmale wie z.B. "mobility management", "call handling" und "service profile management". In einem nächsten Schritt 115 kann der Teilnehmer nun durch Tastatureingabe auswählen, zu welcher Dienstegruppe er weitere Daten angezeigt haben möchte. In diesem Beispiel gibt der Teilnehmer die Ziffer "2" ein, um weitere Daten über die Dienstegruppe "Teledienste" zu erhalten.

In einem nächsten Schritt 120 werden diese Daten nun auf der Flüssigkristalanzeige angezeigt. Dazu greift der Mikroprozessor der Mobilstation auf den Datenspeicher der Berechtigungskarte zu und ruft die gewünschten Daten aus dem Datenspeicher ab. In diesem Beispiel werden dann die verfügbaren Teledienste angezeigt, wobei angegeben ist, ob der jeweilige Teledienst aktiviert ist oder nicht. Die Daten des Diensteprofils können auch angeben mit welcher Einstellung der jewelige Dienst aktiviert ist. So kann etwa angezeigt werden, daß der Dienst "Paketdaten-Übertragung" mit der Einstellung "9,6 kbit/s" Übertragungsgeschwindigkeit aktiviert ist. Wie der Fig. 2 zu entnehmen ist, hat der Teilnehmer in diesem Beispiel den Teledienst "Kurznachrichten", dem sogenannten short message service SMS bereits aktiviert. Die Teledienste "Rufumleitung (call forwarding)" und
"e-mail" (elektronische Post) wurden noch nicht aktiviert.

In einem weiteren Schritt 125 wird der Teilnehmer nun aufgefordert, den angezeigten Zustand zu ändern, d.h. die Teledienste zu aktivieren oder zu deaktivieren. Falls der Teilnehmer den Zustand ändern möchte, braucht er lediglich diejenige Ziffer einzugeben, die dem zu ändernden Teledienst zugeordnet ist. In einem nächsten Schritt 130 gibt der Teilnehmer hier beispielsweise die Ziffer "3" ein, um den Teledienst "e-mail" zu aktivieren.

Die beschriebenen Schritte 110 bis 130 werden ausschließlich am Endgerät durchgeführt, d.h. ohne Beteiligung des Telekommunikationsnetzes. Der Teilnehmer kann also die Daten seines Diensteprofiles sich am Endgerät anzeigen lassen und ändern, ohne auf das Telekommunikationsnetz zugreifen zu müssen. Dadurch wird die Signalisierungslast auf der Verbindung zwischen Endgerät und Telekommunikationsnetz erheblich reduziert. Hat der Teilnehmer im Schritt 130 die Änderung eines Datums seines Diensteprofiles angezeigt, so wird in den nachfolgenden Schritten geprüft, ob die Änderung technisch ausgeführt werden kann.

In einem nächsten Schritt 135 wird dazu die Änderung an die Datenbank HLR innerhalb des Telekommunikationsnetzes MRN gesendet. Diese Maßnahme erfordert lediglich eine kurzzeitige Signalisierung an die Datenbank. In einem weiteren Schritt 140 wird die Änderung durch das Telekommunikationsnetz überprüft. Bei diesem Beispiel wird geprüft, ob der Teledienst "e-mail" für den Teilnehmer aktiviert werden kann oder nicht. Zur Überprüfung muß mittels der Datenbank HLR festgestellt werden, ob der Teilnehmer diesen Teledienst gebucht hat und ob die Funkübertragung zu den Endgeräten sowie das Endgerät selbst für diesen Teledienst eingerichtet sind. Fällt die Überprüfung positiv aus, so wird in einem weiteren Schritt 145 die gewünschte Änderung in der Datenbank des Telekommunikationsnetzes gespeichert und eine Bestätigung an das Endgerät geschickt. Damit ist die gewünschte Änderung durchgeführt, d.h. der Teledienst "e-mail" ist aktiviert.

In einem weiteren Schritt 150 wird nun der Teilnehmer über diesen neuen Zustand informiert. Auf der Anzeige des Endgerätes wird der neue Zustand angezeigt, d.h. es wird angezeigt, daß nun auch der Teledienst "e-mail" aktiviert worden ist. In einem weiteren Schritt 155 wird der Teilnehmer nochmals aufgefordert diesen Zustand, falls gewünscht, zu ändern.

In diesem Beispiel gibt der Teilnehmer in einem letzten Schritt 160 die Ziffer "0" ein, um anzuzeigen, daß er keine Änderung wünscht und den Vorgang abbrechen möchte. Mit dem Ende des in Fig. 2 beschriebenen Verfahrens ist die Änderung des Diensteprofils des Teilnehmers durchgeführt.

Das in Fig. 2 dargestellte Ablaufdiagram gibt nur ein Ausführungsbeispiel für ein erfindungsgemäßes Verfahren wieder. Anhand der Beschreibung dieses Verfahrens 100 wird sehr deutlich, daß gemäß der Erfindung der Teilnehmer sich die Daten für sein Diensteprofil am Endgerät selbst anzeigen lassen und ändern kann. Erst wenn die gewünschte Änderung wirksam werden soll, wird eine Signalisierung vom Endgerät zum Telekommunikatonsnetz durchgeführt. Für die Ablaufsteuerung des Dienstes wird anschließend auf die Datenbank des Telekommunikationsnetzes zugegriffen, nicht auf den Datenspeicher im Endgerät. Demnach ist nur eine kurzzeitige Signalisierung vom Endgerät zu dem Telekommunikationsnetz erforderlich, nämlich dann, wenn die gewünschte Änderung des Diensteprofils durch das Telekommunikationsnetz überprüft werden soll.

Die Erfindung ist sowohl auf drahtlose Telekommunikation, wie etwa beim Mobilfunk nach dem GSM oder dem DECT, anwendbar als auch auf drahtgebundene Telekommunikation, wie etwa beim ISDN. Die Erfindung ist besonders vorteilhaft in solchen Netzen einsetzbar, wo der Teilnehmer eine Berechtigungskarte mit sich führt, um sich zu authentifizieren. Solche Netze werden auch als "UPT.Netze" bezeichnet (universial personal telecommunications). Beispiel für ein solches Netz ist das sogenannte "UMTS" (universal mobile telecommunications system), das zukünftig den drahtlosen Zugang zu Diensten überall und unäbhängig von der verwendeten Systemtechnik ermöglichen soll.

## Patentansprüche

1. Endgerät (MS) für einen Teilnehmer eines Telekommunikationsnetzes (MRN), mit Eingabe- und Ausgabemitteln (KBD; LCD), mit einem damit verbundenen Prozessor (µP), der auf einen Datenspeicher (MEM) zugreift, den der Teilnehmer von dem Endgerät entfernen und mit sich führen kann,
wobei der Datenspeicher ein löschbarer Datenspeicher (MEM) ist, in dem Daten für ein Diensteprofil gespeichert sind, das dem Teilnehmer zugeordnet ist, und daß der Prozessor (µP) die Eingabe- und Ausgabemittel (KBD; LCD) so steuert, daß der Teilnehmer die Daten für das Diensteprofil ändern und ausgeben lassen kann
**dadurch gekennzeichnet, daß**
die Eingabe- und Ausgabemittel Spracheingabe- und Sprachausgabemittel sind, und daß der Prozessor eine sprachgesteuerte Abfrage und Änderung der Daten für das Diensteprofil steuert.

2. Endgerät (MS) nach Anspruch 1, **dadurch gekennzeichnet, daß** der Datenspeicher (MEM) auf einer Berechtigungskarte (SIM) angeordnet ist, auf der die Teilnehmer-Kennung für den Teilnehmer gespeichert ist, und daß das Endgerät (MS) einen mit dem Prozessor (µP) verbundenen Kartenleser (IF) enthält, der die Berechtigungskarte (SIM) zum Lesen und Schreiben des Datenspeichers (MEM) aufnimmt.

3. Endgerät (MS) nach Anspruch 2, **dadurch gekennzeichnet, daß** das Endgerät eine Mobilstation (MS) ist und daß das Telekommunikationsnetz ein Mobilfunknetz (MRN) ist.

4. Endgerät (MS) nach Anspruch 1, **dadurch gekennzeichnet, daß**
die Daten für das Diensteprofil angeben, welche Telekommunikationsdienste der Teilnehmer gebucht hat und welche davon momentan aktiviert sind.

5. Telekommunikotionsnetz (MRN) mit Endgeräten (MS) für Teilnehmer, von denen jedes Eingabe- und Ausgabemittel (KBD; LCD) sowie einen damit verbundenen Prozessor (µP) enthält, der auf einen Datenspeicher (MEM) zugreift, den der Teilnehmer von dem Endgerät (MS) entfernen und mit sich führen kann,
wobei der Datenspeicher ein löschbarer Datenspeicher (MEM) ist, in dem Daten für ein Diensteprofil gespeichert sind, das dem Teilnehmer zugeordnet ist, und daß der Prozessor (µP) die Eingabe- und Ausgabemittel (KBD; LCD) so steuert, daß der Teilnehmer die Daten für das Diensteprofil ändern und sich anzeigen lassen kann
**dadurch gekennzeichnet, daß**
die Eingabe- und Ausgabemittel Spracheingabe- und Sprachausgabemittel sind, und daß der Prozessor eine sprachgesteuerte Abfrage und Änderung der Daten für das Diensteprofil steuert.

6. Telekommunikationsnetz (MRN) nach Anspruch 5, **dadurch gekennzeichnet, daß** das Telekommunikationsnetz (MRN) mindestens eine Datenbank (HLR) enthält in der Kopien der auf den Datenspeichern (MEM) gespeicherten Daten für die Diensteprofile gespeichert sind.

7. Verfahren (110) zum Ändern von Daten für ein Diensteprofil, das einem Teilnehmer eines Telekommunikationsnetzes (MRN) zugeordnet ist, bei dem der Teilnehmer ein Endgerät (MS) bedient, das Spracheingabe- und Sprachausgabemittel sowie einen Prozessor (µP) hat, der auf einen Datenspeicher (MEM) zugreift, den der Teilnehmer von dem Endgerät (MS) entfernen und mit sich führen kann, umfassend die folgenden Schritte:
- In dem Datenspeicher werden die Daten für das Diensteprofil gespeichert;
- Durch Bedienung des Spracheingabemittels wird von dem Teilnehmer die Sprachausgabe von mindestens einem Teil der Daten für das Diensteprofil angefordert (Schritt 115);
- Die angeforderten Daten für das Diensteprofil werden aus dem Datenspeicher (MEM) gelesen und auf dem Sprachausgabemittel ausgegeben(Schritt 120);
- Der Teilnehmer wird durch das Sprochausgabemittel (LCD) aufgefordert, die zu ändernden Daten für das Diensteprofil sprochgesteuert anzugeben (Schritt 125);
- Die zu ändernden Daten werden an das Telekommunikationsnetz gesendet (Schritt 135);
- In dem Telekommunikationsnetz wird zumindest geprüft, ob die Änderung des Diensteprofils technisch ausführbar ist (Schritt 140);
- Falls die Änderung ausführbar ist, werden die geänderten Daten in einer Datenbank des Telekommunikationsnetzes gespeichert und wird eine Bestätigung über die Änderung der Daten an das Endgerät gesendet (Schritt 145);
- Nach dem Empfang der Bestätigung werden die gänderten Daten in den Datenspeicher (MEM) geschrieben (Schritt 150).

## Claims

1. Terminal (MS) for a subscriber of a telecommunications network (MRN), with input and output means (KBD; LCD), with a processor connected to it (µP), which access a data memory (MEM) which the subscriber can remove from the terminal and take with him, wherein the data memory is an erasable data memory (MEM) in which data for a service profile are stored, said service profile being allocated to the subscriber, and that the processor (µP) controls the input and output means (KBD; LCD) in such a way that the subscriber can alter and output the data for the service profile
**characterized in that**
the input and output means are voice input and voice output means and that the processor controls a voice-controlled inquiry and change of the data for the service profile.

2. The terminal (MS) according to Claim 1, **characterized in that** the data memory (MEM) is arranged on an access card (SIM) upon which the subscriber ID for the subscriber is stored, and that the terminal (MS) comprises a card reader (IF) connected to the processor (µP) which holds the access card (SIM) for reading and writing of the data memory (MEM).

3. The terminal (MS) according to Claim 2, **characterized in that** the terminal is a mobile station and that the telecommunications network is a mobile radio network (MRN).

4. The terminal (MS) according to Claim 1, **characterized in that** the data for the service profile specify which telecommunications services the subscriber has reserved and which of those are currently active.

5. A telecommunications network (MRN) with terminals (MS) for subscribers, of which each comprises input and output means (KBD; LCD) as well as a processor (µP) connected thereto, said process accessing a data memory (MEM) which the subscriber can remove from the terminal (MS) and carry with him,
Wherein the data memory is an erasable data memory (MEM) in which data for a service profile are stored, said service profile being allocated to the subscriber, and that the processor (µP) controls the input and output means (KBD; LCD) in such a way that the subscriber can change and display the data for the service profile,
**characterized in that**
the input and output means are voice input and voice output means, and that the processor controls a voice-controlled inquiry and change of the data for the service profile.

6. The telecommunications network (MRN) according to Claim 5, **characterized in that** the telecommunications network (MRN) comprises at least one database (HLR) in which copies of the data for the service profiles stored on the data memories (MEM) are stored.

7. A method (110) for the changing of data for a service profile which is allocated to a subscriber of a telecommunications network (MRN), in which case the subscriber operates a terminal (MS) which has voice input and voice output means as well as a processor (µP), said processor accessing a data memory (MEM) which the subscriber can remove from the terminal (MS) and carry with him, comprising the following steps:
- the data for the service profile are stored in the data memory;
- by operation of the voice input means the subscriber requests the voice output of at least a part of the data for the service profile (Step 115);
- the requested data for the service profile are read out of the data memory (MEM) and output on the voice output means (Step 120);
- the subscriber is prompted by the voice output means (LCD) to specify the data for the service profile to be changed in voice-controlled manner (Step 125);
- the data to be changed are sent to the telecommunications network (Step 135);
- in the telecommunications network it is at least checked whether the change of the service profile is technically feasible (Step 140);
- in case the change is feasible, the changed data are stored in a database of the telecommunications network and a confirmation about the change of the data is sent to the terminal (Step 145);
- after the receipt of the confirmation the changed data are written to the data memory (MEM) (Step 150).

## Revendications

1. Terminal (MS) pour un abonné d'un réseau de télécommunication (MRN), avec des moyens d'entrée et de sortie (KBD ; LCD), auxquels est connecté un processeur (µP) accédant à une mémoire de données (MEM) qui permet d'éloigner l'abonné du terminal et est transportable, la mémoire de données étant une mémoire de données effaçable (MEM) dans laquelle sont enregistrées des données pour un profil de service associé à l'abonné, le processeur (µP) commandant les moyens d'entrée et de sortie (KBD ; LCD) de telle sorte que l'abonné peut modifier les données pour le profil de service et se les faire communiquer, **caractérisé en ce que** les moyens d'entrée et de sortie sont des moyens d'entrée vocale et de sortie vocale, et **en ce que** le processeur commande une requête vocale et la modification des données pour le profil de service.

2. Terminal (MS) selon la revendication 1, **caractérisé en ce que** la mémoire de données (MEM) est placée sur une carte d'authentification (SIM) sur laquelle l'identité d'abonné pour l'abonné est enregistrée, et **en ce que** le terminal (MS) comprend un lecteur de cartes (IF) connecté au processeur (µP) dans lequel la carte d'authentification (SIM) peut être insérée pour la lecture et l'écriture de la mémoire de données (MEM).

3. Terminal (MS) selon la revendication 2, **caractérisé en ce que** le terminal est une station mobile (MS) et le réseau de télécommunication est un réseau radio mobile (MRN).

4. Terminal (MS) selon la revendication 1, **caractérisé en ce que** les données pour le profil de service indiquent le service de télécommunication réservé par l'abonné ainsi que ceux étant momentanément activés.

5. Réseau de télécommunication (MRN) avec un terminal (MS) pour abonné qui comprend des moyens d'entrée et de sortie (KBD ; LCD) ainsi qu'un processeur (µP) connecté à ceux-ci accédant à une mémoire de données qui permet d'éloigner l'abonné du terminal (MS) et est transportable, la mémoire de données étant une mémoire de données effaçable (MEM) dans laquelle sont enregistrées les données pour le profil de service associé à l'abonné, le processeur (µP) commandant les moyens d'entrée et de sortie (KBD ; LCD) de telle sorte que l'abonné peut modifier les données pour le profil de service et se les faire communiquer, **caractérisé en ce que** les moyens d'entrée et de sortie sont des moyens d'entrée vocale et de sortie vocale, et **en ce que** le processeur commande une requête vocale et la modification des données pour le profil de service.

6. Réseau de télécommunication (MRN) selon la revendication 5, **caractérisé en ce que** le réseau de télécommunication (MRN) comprend au moins une banque de données (HLR) dans laquelle sont enregistrées des copies des données pour le profil de service enregistrées sur la mémoire de données (MEM).

7. Procédé (110) de modification de données pour un profil de service associé à un abonné d'un réseau de télécommunication (MRN) dans lequel l'abonné utilise un terminal (MS) possédant des moyens d'entrée vocale et de sortie vocale ainsi qu'un processeur (µP) pouvant accéder à une mémoire de données (MEM) qui permet d'éloigner l'abonné du terminal (MS) et est transportable, comprenant les étapes suivantes :
- les données pour le profil de service sont enregistrées dans la mémoire de données ;
- en utilisant le moyen d'entrée vocale, l'abonné exige la sortie vocale d'au moins une partie des données pour le profil de service (étape 115) ;
- les données requises pour le profil de service sont lues sur la mémoire de données (MEM) et communiquées par le biais du moyen de sortie vocale (étape 120) ;
- le moyen de sortie vocale (LCD) demande à l'abonné d'indiquer vocalement les données à modifier pour le profil de service (étape 125) ;
- les données à modifier sont envoyées au réseau de télécommunication (étape 135) ;
- dans le réseau de télécommunication, il est vérifié au moins que la modification du profil de service est techniquement réalisable (étape 140) ;
- le cas échéant, les données modifiées sont enregistrées dans une banque de données du réseau de télécommunication et une confirmation de modification des données est envoyée au terminal (étape 145) ;
- après réception de la confirmation, les données modifiées sont écrites dans la mémoire de données (MEM) (étape 150).
